# EUROPEAN PATENT APPLICATION

(11) **EP 3 936 391 A1**
(43) Date of publication of application: **12.01.2022**
(21) Application number: 20185381.9
(22) Date of filing: 10.07.2020
(51) Int. Cl.: B60R 19/24, B60R 19/34

(54) **CRASH MANAGEMENT SYSTEM WITH AN ADDITIONAL ELEMENT CONNECTING THE ABSORBER TO THE CROSS BEAM**

(71) Applicant: Constellium Singen GmbH, 78224 Singen (DE)
(72) Inventor: WIEDEMANN, Jochen, 78315 Radolfzell (DE); SCHMID, Thomas, 78315 Radolfzell (DE); KLEINDICK, Tim, 78224 Singen (DE); BRAUNER, Jambolka, 78224 Singen (DE); HOETZ, Joerg, 78234 Engen (DE); BOEHLER, Patrick, 78464 Konstanz (DE)
(74) Representative: Constellium - Propriété Industrielle

(57) **Abstract**

A crash management system (1) for a front or rear part of a vehicle having a longitudinal direction X, a transverse direction Y perpendicular to the longitudinal direction X and a vertical direction Z perpendicular to the longitudinal direction X and to the transverse direction Y, said crash management system (1) having a crash management system length (L_{C}) along the Y direction and comprising: a cross beam (2) having a cross beam length (L_{B}) along the Y direction, at least one additional element (3) having an outer face (36) and an inner face (50), wherein the additional element has at least one wall (38) which is connected to said cross beam (2), at least one absorber (4) having an outer face and/or an inner face, characterized in that said cross beam length (L_{B}) is smaller than said crash management system length (L_{C}), said cross beam (2) is connected to said absorber (4) through said additional element (3).

## Description

### FIELD OF THE INVENTION

The invention relates to a crash management system having an additional element that is subjected to connect an absorber to a cross beam and to improve the behaviour of the crash management system in case of a car to car collision.

### BACKGROUND

The term crash management system is generally used to describe the structural module consisting of the cross beam and the related attachments which connect the cross beam to the longitudinal side members of the vehicle. The main goal of a crash management system is to prevent damages following an impact between a vehicle and an obstacle.

A crash management system has the ability to absorb sufficient crash energy to meet the OEM's requirements. In other words, the crash management system should be able to absorb energy at the start of a crash and to guide the remaining crash forces into the rest of the body structure.

A crash management system includes a cross beam typically extending laterally across the front or rear end of a vehicle and absorbers also called shock absorbers or deformation elements.

The crash management system is positioned on the front (or rear) structure of the vehicle such that each absorber is interposed between a side member and said cross beam. The absorber is therefore both a member by which the bumper cross-beam is fixed to the front structure of the vehicle and a deformable member designed to absorb a certain amount of kinetic energy transferred from the cross beam in the event of an impact. Thus elements are configured so as to undergo deformation as a result of the impact and thus convert kinetic energy into deformation energy by cold deformation. In some cases, the absorbers are coupled with the front longitudinal members of the motor vehicle body in order to introduce the additional crash energy into them.

In order to insure the safety of passengers, vehicles are subject to a wide variety of tests and evaluations. Such tests are usually mandated by government regulations and insurance certifications. Therefore, the crash management systems are continuously optimized by the vehicle manufacturers who should often completely modify the system, to propose a better protection or also to comply to the new requirements. The improvement proposed should not imply a too much increase of weight of the vehicle in order to have less impact as possible on the environmental aspect.

Currently, most of the crash management systems tie absorbers directly to the cross beam by screwing or welding. The transfer of the crash energy is then directly provided from the cross beam to the absorbers and to the vehicle frame structure. Such systems mainly have several weak points, either on the cross beam or in the absorber particularly in the welded areas, which can limit the development of new satisfying stiffer solutions.

EP 3626545 A1 discloses a bumper system for a motor vehicle comprising a cross beam, at least one absorber, at least an intermediate component to attach the absorber to the cross beam, said intermediate component being connected to the cross beam rear wall through a first contact area and to the absorber through a second contact area.

There is a need to have a flexible solution able to answer to the future development in increasing stiffness of the system and decrease the stress in the welded areas.

### SUMMARY OF THE INVENTION

The present invention proposes a solution to enhance the ability of a crash management system to absorb and transfer impact energy while mastering damages on the weakened area of the system. The present invention relates to a crash management system comprising a cross beam, at least one absorber and at least one additional element. The cross beam and the absorber are decoupled from each other but remain connected through the additional element.

The additional element of the invention is preferably a hollow profile.

### DESCRIPTION OF THE INVENTION

The crash management systems are continuously optimized to answer to the requirement imposed by the legislation. The cross beam is to be configured as bending-stiff as possible so that the different impact scenarios, for example collision with a pole, a bumper-to-bumper crash or also the collision with an obstacle, are accounted for and an uncontrolled entering into the motor vehicle is prevented. Absorbers being connected with the cross beam and the longitudinal members, the load path thus extends from the bumper cross beam via the absorbers into the longitudinal members of the motor vehicle. Three mains areas are considered as weakened areas in a crash management system, the connection of the absorber to the vehicle frame, the connection of the absorber to the cross beam and the cross beam itself in the near area of the absorber. If the cross beam is configured with a high bending stiffness, cracks often occurs at the connection between the absorber and the cross beam. In particular, when the absorber is directly welded to the bumper cross beam, crack occurs in the heat affected zone and the crash management systems does not sustain a sufficient load.

The problem solved by the invention is a crash management system which reduces the stress on the weakened area when an impact occurs and in the same time gives a maximum of flexibility in the design of the crash management system. With the implementation of the additional element, the absorber or the cross beam will deform locally instead of failure.

In the description, the X, Y and Z axis corresponds to the local referential of the vehicle. X corresponds to the longitudinal direction of the vehicle, Y the transversal direction, perpendicular to X and Z the vertical direction perpendicular to the longitudinal direction X and to the transverse direction Y.

The solution proposed by the invention is a flexible crash management system having a crash management system length (L_{C}) along the Y direction comprising:
a. a cross beam having a cross beam length (L_{B}) along the Y direction
b. at least one additional element having an outer face and an inner face, wherein the additional element has at least one wall which is connected to said cross beam
c. at least one absorber having an outer face and an inner face characterized in that
   - said cross beam length (L_{B}) is smaller than said crash management system length (L_{C})
   - said cross beam is connected to said absorber through said additional element

According to the invention, the crash management system is a crash management system for a front or a rear part of a vehicle having a longitudinal direction X, a transversal direction Y perpendicular to the longitudinal direction X and a vertical direction Z perpendicular to the plane defined by said directions X and Y, comprising a cross beam globally oriented in the transversal direction Y, at least one absorber globally oriented in the longitudinal direction X and an additional element. The crash management system of the invention comprises both a cross beam and an absorber linked to one additional element, wherein both links are independent from each other. The cross beam of the invention has an outer face and an inner face. The outer face is facing the outside of the vehicle and the inner face is facing the inside of the vehicle. Similarly, the additional element of the invention and the absorber have an outer face and an inner face. The outer face is facing the outside of the vehicle and the inner face is facing the inside of the vehicle.

The crash management system of the invention comprises a cross beam which may be a hollow profile having one or several chambers or a general open section profile. In the embodiment of the invention where the cross beam is a hollow profile, the cross beam has at least one outer wall and at least one inner wall. In this particular embodiment the outer wall represents the outer face of the cross beam. In the embodiment of the invention where the cross beam is an open section profile, the cross beam may have an open section on its outer face. In this particular embodiment the cross beam outer face is not materialised by an outer wall.

The length of a crash management system (L_{C}) corresponds generally to the entire length of the cross beam of the front or rear side of the vehicle. According to the invention, several elements contribute to the length of the crash management system (L_{C}), in particular the cross beam with a length L_{B} and the additional element with a distance D. In a particular embodiment, the distance D may be the length of the additional element.

In some embodiment, other elements may be added to the already present cross beam and additional element. Preferably these other elements are positioned on the external side of the crash management system in the transversal direction Y to enlarge it and to extend the crash behaviour of the crash management system of the invention.

According to the invention, the length of the crossbeam (L_{B}) of the invention is smaller than the total length of the crash management system (L_{C}). One advantage is to have the possibility to reduce the weight of the cross beam and consequently reduce the weight of the crash management system. Another advantage is the flexibility of design given by the shape of each element.

According to the invention, the cross beam of the crash management system is not directly connected to the absorber which has several advantages in the design of the crash management system and in the capacity of the crash management system to absorb impact energy and its transfer in the event of an impact. The positions in the vertical direction Z of the cross beam and of the absorber are preferably independent. Therefore, the invention allows a very flexible design concerning the Z-position of the bumper beam and allows to adjust an optimal position of cross beam according to required load cases. Advantageously, the additional element of the invention makes it possible in particular, to offer different crash management system configurations in the vertical direction, by adjusting the height of the bumper beam in the vertical direction Z avoiding to change the elements part of the crash management system. Moreover, the crash management system of the invention allows to avoid a direct welding between the absorber and the cross beam and consequently improve the impact energy absorption and transfer in case of impact.

According to a preferred embodiment of the invention, the cross beam of the crash management system has a straight shape parallel to the transverse direction Y. One advantage of this embodiment is that a bending process is not needed on the cross beam so that the production process is reduced in time and in cost. In some embodiments of the invention, a globally curved shape of the crash management system is given by the additional element and/or by others elements added on the end side of the crash management system.

The outer face of a crash management system, facing the outside of the vehicle, according to the prior art corresponds generally to the outer face of the cross beam. According to one embodiment of the invention, the outer face of the crash management system comprises the outer face of the cross beam and the outer face of the additional element. Other elements may be added to the already present cross beam and additional element. Preferably these other elements are positioned on the external sides of the crash management system. In some embodiments, the outer face of the crash management system comprising the outer face of the cross beam and the outer face of the additional element, is globally curved.

Preferably the additional element which contributes to the crash management length L_{C} by a distance D is a hollow profile having at least one chamber. The additional element of the invention has an outer face and an inner face. The outer face is facing the outside of the vehicle and the inner face is facing the inside of the vehicle. The outer face and the inner face of the additional element according to the invention have at least one wall. In some particular embodiment, the outer face and the inner face may have flanges. The additional element of the invention is connected to the absorber. Preferably the absorber outer face is connected to the additional element inner face.

Preferably, the additional element is made of aluminium alloy, steel or plastic.

According to the invention the additional element is connected to the cross beam. Preferably the crash management system comprises an additional element at each end side of the cross beam. The additional element is connected to the cross beam by at least one of its wall. In some embodiments the outer face of the additional element may have a wall extending as a flange, and overlapping the cross beam. In this particular embodiment the flange does not contribute to the distance D. In another embodiment the inner face of the additional element may have a wall extending as a flange and used as connecting wall between the cross beam inner wall and the additional element. In this particular embodiment the flange does not contribute to the distance D

According to the invention, the additional element is fixed to the cross beam by any conventional means preferably by screwing, welding and/or bonding.

The shape of the additional element depends on the level of energy to be absorbed by the crash management system. In some embodiments, the additional element may comprise one chamber on the outer face, having triangular shape oriented in such a way that the crash management system of the invention has a globally curved shape.

In another embodiment the additional element may comprise one chamber positioned on the inner face, one of the wall of this chamber being used as connecting wall between the cross beam inner wall and the additional element. In this embodiment, this chamber may avoid failure by influencing the kinematics of the system.

In one another embodiment the additional element may have several chambers positioned on the inner face to improve the system.

In some particular embodiment the additional element may have several chambers. The chambers may not have all the same shape.

In other particular embodiments the additional element may have a flange extending the outer face of the additional element.

In a most preferred embodiment, the additional element is an extruded hollow profile, which extrusion direction is substantially parallel to the vertical direction Z. The extrusion direction parallel to the vertical direction Z permits to increase the flexibility of the geometry according to the bumper beam bending line without any additional machining operations. Additionally, having an extruded connecting element, which extrusion direction is parallel to the vertical direction Z, allows to define all the needed geometry and for example to give to the crash management system a globally curved shape without any bending process. Furthermore, the geometry of the connecting element is limited only by the extrusion ability of the element.

A crash management system may comprise a hole for a towing eye system to allow the vehicle to be towed by another vehicle, in the case of breakdown, accident damage, insufficient fuel and the like. Most commonly a vehicle has a single towing eye system towards one end of the cross beam. Such a system needs to be solid and resistant to allow a vehicle to be towed without any damages. Many of the current vehicles have the towing eye system integrated in the absorber.

In one embodiment of the invention the additional element comprises a hole for a towing eye system. The hole for the towing eye system is disconnected of the cross beam and crash box positions. The hole may be placed on the outer face of the additional element, anywhere within the additional element. The position is designed according to the vehicle type. The additional element of the crash management system according to the invention allows to design a flexible system.

In a further embodiment, the additional element may be drilled in order to reduce the weight of the or to facilitate the attachment of other elements.

### DESCRIPTION OF THE DRAWING:

Figure 1 is a view of one crash management system according to the invention.
Figure 2a is a front view of the crash management system of the Fig. 1.
Figure 2b is a front view of a similar crash management system of Fig 1 with a downwardly offset cross beam.
Figure 2c is a front view of a similar crash management system of Fig 1 with an upwardly offset cross beam.
Figure 3 is an overhead view of one end of the outer face of the crash management system of Fig 1.
Figure 4 is an overhead view of one end of the inner face of the crash management system of Fig 1.
Figure 5 is a view of one crash management system according to the invention.
Figure 6 is a front view of the crash management system of the Fig. 5.
Figure 7 is an overhead view of one end of the outer face of the crash management system of Fig 5.
Figure 8 is a view of one crash management system according to the invention.
Figure 9 is a front view of the crash management system of the Fig. 8.
Figure 10 is an overhead view of one end of the outer face of the crash management system of Fig 8.
Figure 11 is a view of one crash management system according to the invention.
Figures 12a to 12e are overhead views of one end of the outer face of crash management systems according to the invention.

List of references:
1, 1,' 1", 1''': crash management system
2, 2": cross beam
3, 3a, 3b, 3c,3a', 3b', 3c': additional element
4: absorber
5: hole for towing eye system
6: the welding seam
7: external element
22: outer wall of the cross beam
23: inner wall of the cross beam
34, 34a, 34b, 34c, 34d, 34e, 34f, 34g, 34h, 34i, 34j, 34k, 341, 34a', 34b', 34c' 34d', 34e' 34f', 34g', 34h': hollow chambers of the additional element
31, 31a, 31b,31c, 31d, 32, 32a, 32b, 32c,32d, 33, 33a, 33b,33c, 33d,35, 35a, 35b, 35c,35d, 37a,37b, 37c 37d, 38a, 38b, 38c, 38d, 39b, 39c, 40, 31a', 32a' 33a', 35a': walls of the additional element
36, 36a, 36b, 36c, 36d, 36a',36b', 36c': outer face of the additional element
50, 50a, 50b, 50c, 50d, 50a', 50b', 50c': inner face of the additional element
43: connecting plate
80, 80', 81, 81': open chamber
361, 362, 363, 361', 362', 363' 365, 366, 367, 368, 369, 370, 371, 372: walls of the additional element
364, 364', 364": flange of the additional element
D, D', D": distance
E: extrusion direction
L_{C}, L_{C}', L_{C}": crash management system length
L_{B}: cross beam length

### DETAILED DESCRIPTION OF THE INVENTION

Throughout all the figures, same or corresponding elements may generally be indicated by same reference numerals. These depicted embodiments are to be understood as illustrative of the invention and not as limiting in any way.

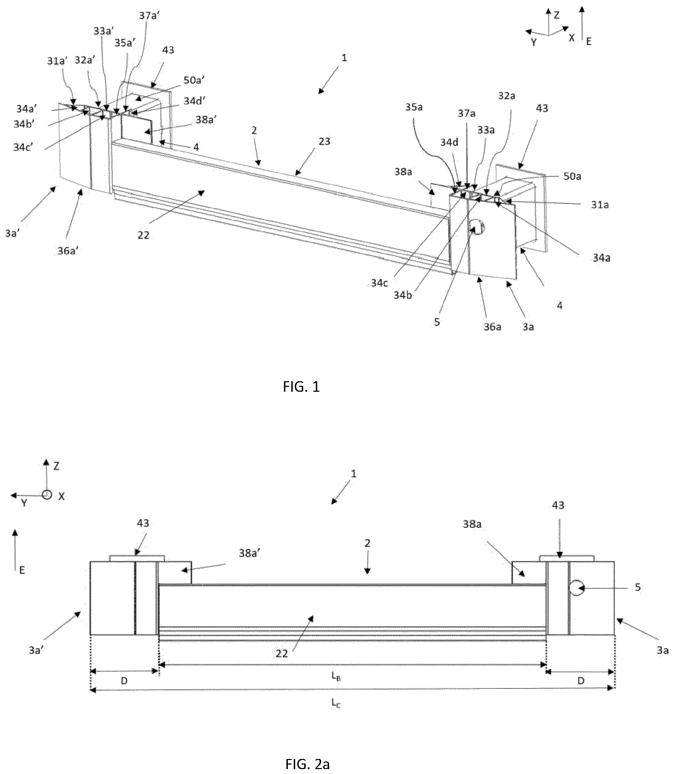

Figure 1 represents a crash management system according to one embodiment of the invention. The crash management system 1 is composed of a cross beam 2, two absorbers 4 positioned at each end side of the crash management system 1, one additional element 3a on one side of the crash management system 1, and a second additional element 3a' on the other side of the crash management system.

The cross beam 2 of the crash management system 1 is a straight hollow profile positioned along a transverse axis Y perpendicular to longitudinal direction X. The cross beam is connected to a first additional element 3a on one of its end and to a second additional element 3a'on the other end. The height of the cross beam 2 is smaller than the height of the additional elements 3a and 3a'.

The crash management system 1 of the figure 1 comprises two absorbers 4 that are connected to the additional elements 3a and 3a' inner faces. On the other end the absorbers are connected to the longitudinal beam of the vehicle (not shown) using the connecting plates 43.

Therefore, the additional element 3a and 3a' connect the cross beam 2 and the two absorbers 4, respectively. Due to the symmetry about a (YZ) plane passing through the middle of the cross beam of the crash management system the additional element 3a' is generally the mirror image of the additional element 3a.

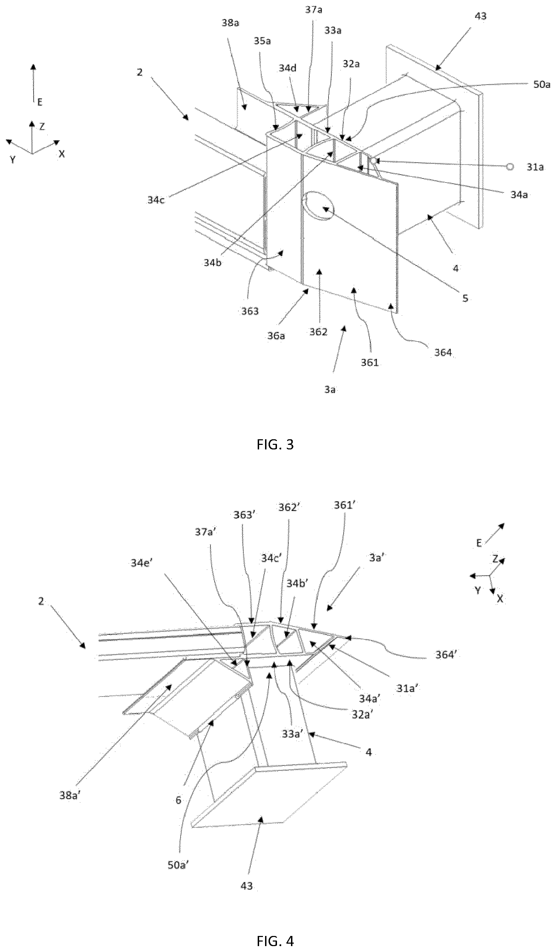

The additional element 3a (3a') is a hollow profile with hollow chambers 34a to 34d (34a' to 34d'). The hollow chambers 34a, 34b and 34c are positioned on the outer face 36a of the additional element 3a and the hollow chamber 34d is positioned on the inner face 50a of the additional element 3a. The hollow chambers 34a, 34b, 34c and 34d have not the same shape. The additional element 3a has walls 31a, 32a, 33a, 35a, 36a and 37a. The walls 35a and 38a are in contact with the cross beam 2. The inner face 50a connects the absorber 4 to the additional element 3a and therefore to the crash management system 1. The additional element 3a is more precisely described on figure 3

The additional element 3a has a hole 5 on its outer face 36a to place a towing eye system.

The connecting element 3a' is a hollow profile with hollow chambers 34a' to 34d'. The hollow chambers 34a', 34b' and 34c' are positioned on the outer face of the additional element 3a' and the hollow chamber 34d' is positioned on the inner face 50a' of the additional element 3a'. The hollow chambers 34a', 34b', 34'c and 34d' have not all the same shape. The additional element 3a' has walls 31a', 32a', 33a', 35a', 36a' and 37'a. The walls 35a' and 38a' are in contact with the cross beam 2. The inner face 50a' connects the absorber 4 to the additional element 3a' and therefore to the crash management system 1.

The outer face of the crash management system 1 comprises the outer wall 22 of the cross beam 2 and the outer face 36a and 36a'. Due to the shape of the outer face 36a and 36a', the outer face of the crash management system 1 is globally curved.

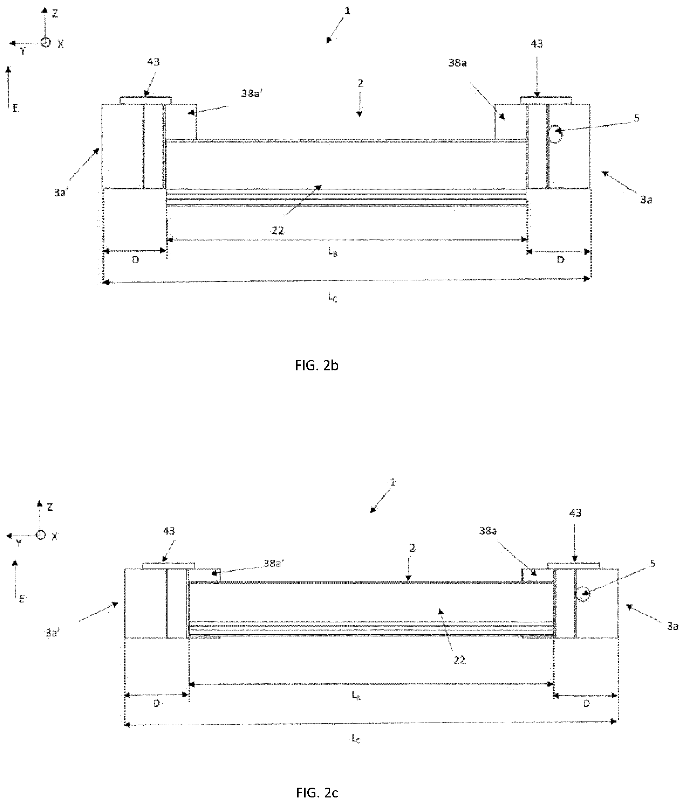

Figures 2a, represent the front view of the crash management system of Figure 1. Figure 2b and Figure 2c represent the front view of the crash management system of Figure 1 with different cross beam positions in relation to the additional element 3a and 3a' respectively with a downwardly offset cross beam and with an upwardly offset cross beam.

The crash management system has a length L_{C}. The cross beam 2 has a length L_{B} along the Y direction. The crash management system length L_{C} is equal to the cross beam length L_{B} enlarged by a distance D from each of the elements 3a and 3a'.

Figure 3 represents an overhead view of one end of the outer face of the crash management system of the Figure 1. The inner face 50a of additional element 3a is connected to one end (the outer face) of the absorber 4. The other end of the absorber 4 is connected to the longitudinal beam of the vehicle by the connecting plate 43. The cross beam 2 is in contact with the walls 35a and 38a of the additional element 3a.

The additional element 3a of figure 3 has four chambers 34a, 34b, 34c and 34d. The outer face 36a of the additional element 3a is composed by three walls 361, 362, 363 corresponding respectively to walls of the chambers 34a, 34b, 34c and a flange 364. Each chamber 34a, 34b, 34c and 34d has a specific shape. The chambers 34a and 34d have a triangular shape, whereas the chambers 34b and 34c have a globally rectangular shape. The outer face 36a has a globally curved shape.

Figure 4 represents an overhead view of one end of the inner face of the crash management system of Figure 1. The inner face 50a' of the additional element 3a' is connected to one end (outer face) of the absorber 4 by a welding seam 6. The other end of the absorber 4 is connected to the longitudinal beam (not shown) of the vehicle by the connecting plate 43.

The additional element 3a' of the figure 4 has four chambers 34a', 34b', 34c' and 34d'. The outer face 36a' of the additional element 3a' is composed by three walls 361', 362', 363' corresponding respectively to walls of the chambers 34a', 34b', 34c' and a flange 364'. Each chamber 34a', 34b', 34c' and 34d' has a specific shape. The chambers 34a' and 34d' have a triangular shape, whereas the chambers 34b' and 34c' have a globally rectangular shape. The outer face 36a' has a globally curved shape.

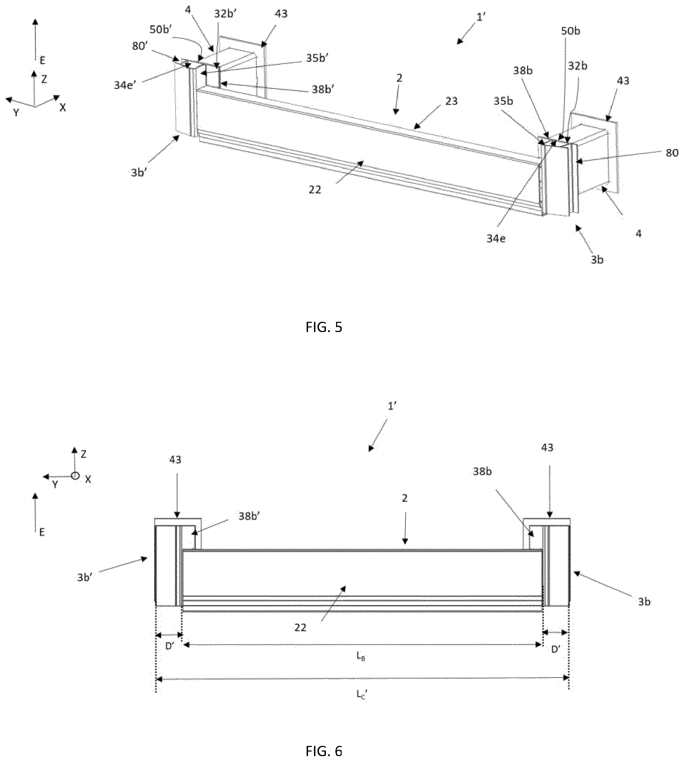

Figure 5 and Figure 6 represent a crash management system according to one embodiment of the invention. The crash management system 1' is composed by a cross beam 2, two absorbers 4 positioned at each end side of the crash management system 1', one additional element 3b on one side of the crash management system 1', and a second additional element 3b' on the other side of the crash management system. The cross beam 2 of the crash management system 1' is a straight hollow profile positioned along a transverse axis Y perpendicular to longitudinal direction X.

The inner face 50b of additional element 3b is connected to one end (the outer face) of the absorber 4. The other end of the absorber 4 is connected to the longitudinal beam of the vehicle by the connecting plate 43. The cross beam 2 is in contact with the walls 35b and 38b of the additional element 3b. The inner face 50b' of additional element 3b' is connected to one end (the outer face) of the absorber 4. The other end of the absorber 4 is connected to the longitudinal beam of the vehicle by the connecting plate 43. The cross beam 2 is in contact with the walls 35b' and 38b' of the additional element 3b'.

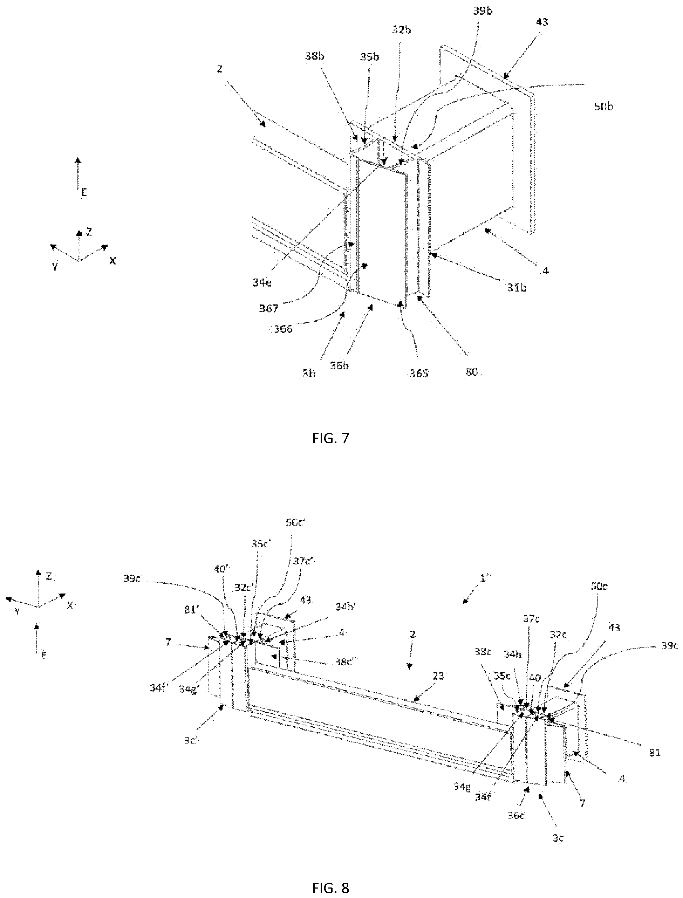

The crash management system length L_{C}' represented in figure 6 is equal to the cross beam length L_{B} enlarged by a distance D' from each the elements 3b and 3b'. The additional element 3b is more precisely described on figure 7. Due to the general symmetry about a plane (YZ) passing through the middle of the cross beam crash management system the additional element 3b' is generally the mirror image of the additional element 3b.

Figure 7 represents an overhead view of one end of the outer face of the crash management system of the Figure 5. The inner face 50b of additional element 3b is connected to one end of the absorber 4, the other end of the absorber 4 being connected to the longitudinal beam of the vehicle (not shown) by the connecting plate 43.

The additional elements 3b is a hollow profile with one hollow chambers 34e and one open chamber 80. The additional element 3b has walls 31b, 32b, 35b and 38b. The wall 38b connects the cross beam 2 to the additional element 3b. the inner face 50b connects the absorber 4 to the additional element 3b. The outer face 36b of the additional element 3b is composed by a wall 366 corresponding to one wall of the chamber 34e and a by a wall 365 corresponding to the wall of the open chamber 80. The hollow chamber 34e has a quadrilateral shape with walls 366, 32b, 39b and 38b opposite to each other in pairs. The wall 366 is not parallel to the opposite wall 32b. The outer face 36b has consequently a globally curved shape.

The outer wall 22 of the cross beam 2 and the outer face 36b and 36b' (outer face of the additional element 3b') composed the outer face of the crash management system 1'. Due to the shape of the outer face 36b and 36b', the outer face of the crash management system 1' is globally curved.

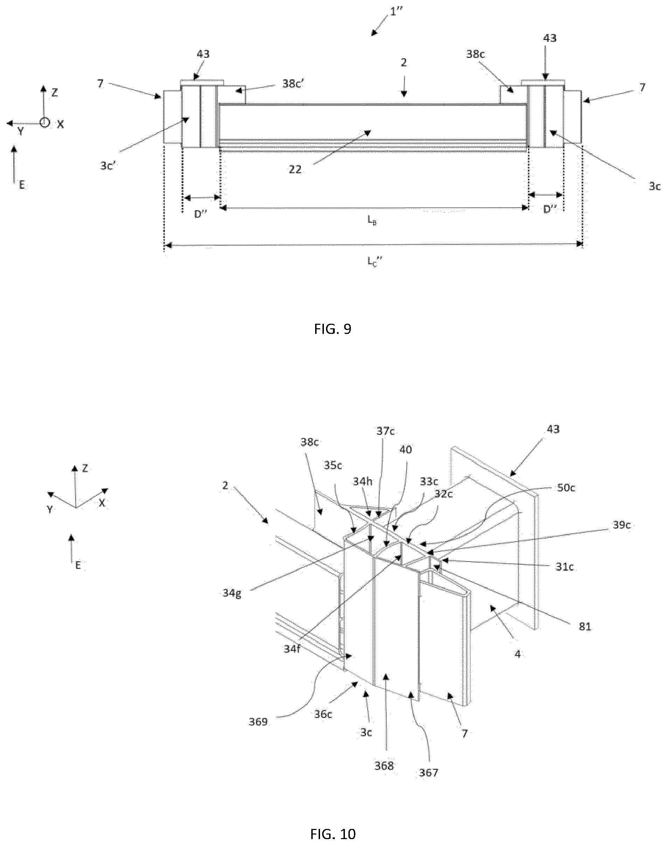

Figure 8 and figure 9 represent a view of a crash management system according to one embodiment of the invention.

The crash management system 1" is composed by a cross beam 2, two absorbers 4 positioned at each end side of the crash management system 1", one additional element 3c on one side of the crash management system 1", and a second additional element 3c' on the other side of the crash management system and also an external element 7 on each end side of the crash management system 1". The cross beam 2 of the crash management system 1" is a straight hollow profile positioned along a transverse axis Y perpendicular to longitudinal direction X.

The inner face 50c of additional element 3c is connected to one end (the outer face) of the absorber 4. The other end of the absorber 4 is connected to the longitudinal beam of the vehicle by the connecting plate 43. The cross beam 2 is in contact with the walls 35c and 38c of the additional element 3c. The inner face 50c' of additional element 3c' is connected to one end (the outer face) of the absorber 4. The other end of the absorber 4 is connected to the longitudinal beam of the vehicle by the connecting plate 43. The cross beam 2 is in contact with the walls 35c' and 38c' of the additional element 3b'. The external element 7 is placed in contact with the walls 39c and 39'c of the additional elements 3c and 3c', respectively.

The crash management system length L_{C}" represented in figure 9 is higher than the cross beam length L_{B} enlarged by the distance D" from each the elements 3c and 3c'. The two external elements 7 contribute to the crash management system length. The additional element 3c is more precisely described on figure 10. Due to the symmetry about a plane (YZ) passing through the middle of the cross beam of the crash management system the additional element 3c' is the mirror image of the additional element 3c.

Figure 10 represents an overhead view of one end of the outer face of the crash management system of the Figure 8. The inner face 50c of additional element 3c is connected to one end of the absorber 4 (outer face of the absorber), the other end of the absorber 4 being connected to the longitudinal beam of the vehicle (not shown) by the connecting plate 43.

The additional elements 3c is a hollow profile with three hollow chambers 34f, 34g, 34h and one open chamber 81. The outer face 36c of the additional element 3c is composed by three walls 367, 368, 369 corresponding respectively to walls of the chambers 81, 34f, and 34g. Each chamber 34f, 34g and 34h has a specific shape. The chambers 34f and 34g have quadrilateral shape, whereas the chamber 34h has a triangular shape. The hollow chamber 34f has a quadrilateral shape with walls 368, 32c, 39c and 40 opposite each other in pairs. The wall 368 is not parallel to the opposite wall 32c which gives to the outer face 36c a globally curved shape.

The outer face of the crash management system 1" comprises the outer wall 22 of the cross beam 2 and the outer face 36c and 36c' (outer face of the additional element 3c') and also the outer face of the external element 7. Due to the shape of the outer face 36c and 36c', the outer face of the crash management system 1" is globally curved.

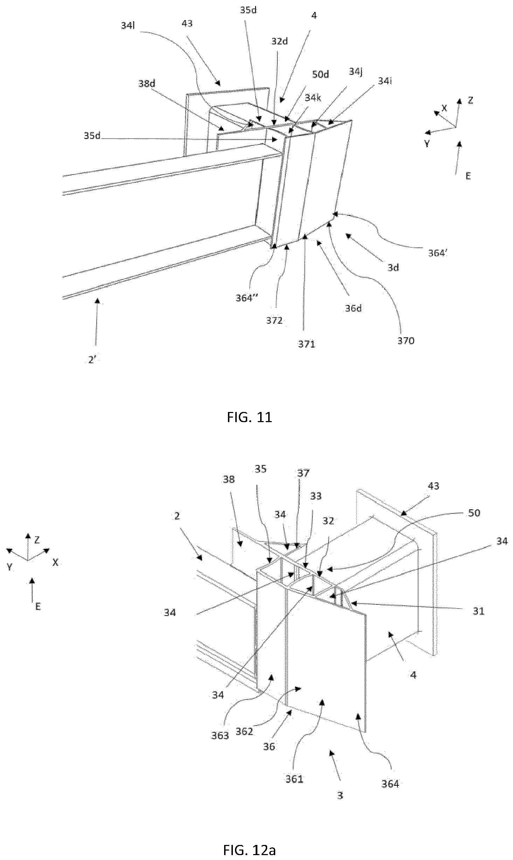

Figure 11 represents an overhead view of one end of the outer face of a crash management system according to one embodiment of the invention.

The crash management system is composed by a cross beam 2', one absorber 4, one additional element 3d on one side of the crash management system. Due to the symmetry about a plane (YZ) passing through the middle of the cross beam of the crash management system, an additional element 3d' being the mirror image of the additional element 3d is positioned on the other end side of the crash management system'.

The absorber 4 is connected to the additional elements 3d inner face 50d. On the other end the absorber is connected to the longitudinal beam of the vehicle (not shown) using the connecting plate 43.

The cross beam 2' of the crash management system is a straight open section profile positioned along a transverse axis Y perpendicular to longitudinal direction X. The cross beam outer face is not materialised by an outer wall. The contour of the open section represents the outer face of the cross beam2'.

The additional element 3d is a hollow profile with four hollow chambers 34i, 34j, 34k and 341. The hollow chambers 34i, 34j and 34k are positioned on the outer face 36d of the additional element 3d and the hollow chamber 341 is positioned on the inner face 50d of the additional element 3d. The hollow chambers 34i, 34j, 34k and 341 have not the same shape. The walls 35d and 38d are in contact with the cross beam 2'. The inner face 50d connects the absorber 4 to the additional element 3d.

The additional element 3d has four chambers 34i, 34j, 34k and 341. The outer face 36d of the additional element 3d has three walls 370, 371, and 372 corresponding respectively to walls of the chambers 34i, 34j, and 34k and two flanges 364' and 364". Each chamber 34i, 34j, 34k and 341 has a specific shape. The chambers 34i and 341 have a triangular shape, whereas the chambers 34j and 34k have a globally rectangular shape. The outer face 36d has a globally curved shape.

The inner face 50d of additional element 3d is connected to one end of the absorber 4 (outer side of the absorber 4). The other end of the absorber 4 is connected to the longitudinal beam of the vehicle by the connecting plate 43.

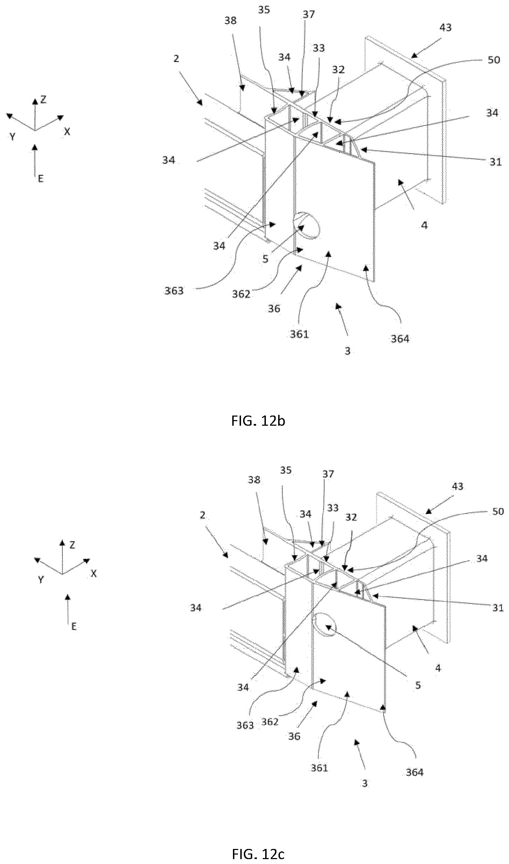

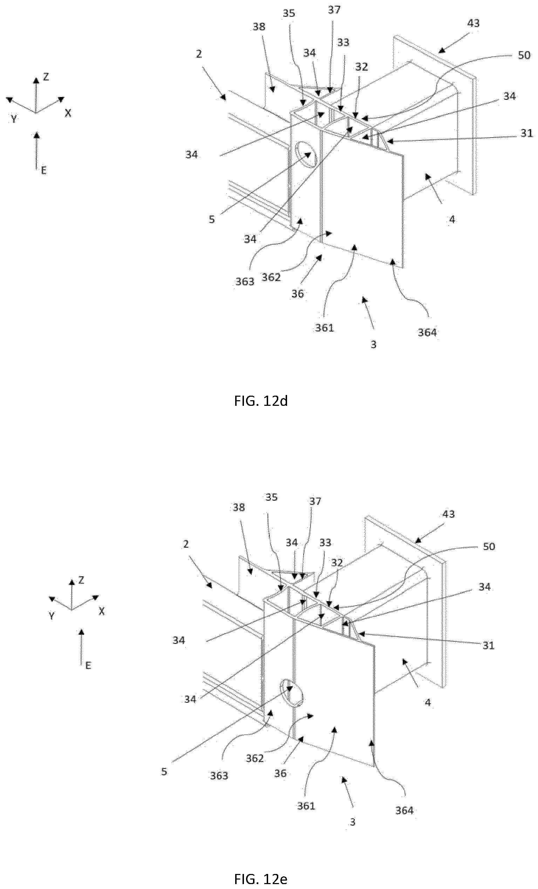

Figures 12a to 12e represent overhead views of one and of the outer face of crash management systems according to several embodiments of the invention with and without a hole for the towing eye system. The additional element 3 connected to the cross beam 2 and to the absorber 4 of the figure 12a has no hole in its outer face 36 to place the towing eye system. Figures 12b and 12c represents a crash management system with an additional element 3 drilled on its wall 362 to place the towing eye system. The hole 5 on the figure 12b is on the bottom of the wall 362 whereas on the figure 12c, the hole 5 is on the top of the wall 362. Figure 12d represents a crash management system with an additional element 3 drilled on the top of its wall 363 to place the towing eye system. Figure 12e represents a crash management system with an additional element 3 drilled in-between the wall 362 and 363 to place the towing eye system.

## Claims

1. A crash management system (1) for a front or rear part of a vehicle having a longitudinal direction X, a transverse direction Y perpendicular to the longitudinal direction X and a vertical direction Z perpendicular to the longitudinal direction X and to the transverse direction Y, said crash management system (1) having a crash management system length (L_{C}) along the Y direction and comprising:
a. a cross beam (2) having a cross beam length (L_{B}) along the Y direction,
b. at least one additional element (3) having an outer face (36) and an inner face (50), wherein the additional element has at least one wall (38) which is connected to said cross beam (2),
c. at least one absorber (4) having an outer face and/or an inner face,
**characterized in that**
- said cross beam length (L_{B}) is smaller than said crash management system length (L_{C}),
- said cross beam (2) is connected to said absorber (4) through said additional element (3).

2. A crash management system (1) according to claim1 wherein the positions in the vertical direction Z of said cross beam (2) and of said absorber (4) are independent.

3. A crash management system (1) according to any one of claims 1 to 2 wherein said crash management system (1) has an outer face comprising the outer face of said cross beam (2) and the outer face (36) of said additional element (3),

4. A crash management system (1) according to any one of claims 1 to 3 wherein said absorber (4) has an outer face connected to said additional element inner face (50).

5. A crash management system (1) according to any one of claims 1 to 4 wherein said cross beam (2) has a straight shape parallel to the transverse direction Y.

6. A crash management system (1) according to any one of claims 3 to 5 wherein said outer face of said crash management (1) system is globally curved.

7. A crash management system (1) according to any one of claims 1 to 6 wherein said additional element (3) contribute to said crash management length (L_{C}) by a distance D.

8. A crash management system (1) according to any one of claims 1 to 7 wherein said additional element (3) is fixed to the cross beam by any conventional means preferably by screwing, welding and/or bonding.

9. A crash management system (1) according to any one of claims 1 to 8 wherein said additional element (3) is a hollow profile having at least one chamber (34).

10. A crash management system according to any one of claims 1 to 9 wherein said additional element (3) is made of aluminium alloy, steel or plastic.

11. A crash management system (1) according to any one of claims 1 to 10 wherein said additional element (3) is an extruded hollow profile, which extrusion direction (E) is substantially parallel to said vertical direction Z.

12. A crash management system (1) according to any one of claims 1 to 11 wherein said additional element (3) comprises a hole (5) for a towing eye system.
